# FASCICULE DE BREVET EUROPEEN

(11) **EP 3 322 084 B1**
(45) Date de publication et mention de la délivrance du brevet: **09.02.2022**
(21) Numéro de dépôt: 17195321.9
(22) Date de dépôt: 06.10.2017
(51) Int. Cl.: H02P 6/16, H02P 6/20

(54) **PROCEDE DE CONTROLE DU DEMARRAGE D'UN MOTEUR ELECTRIQUE SYNCHRONE TRIPHASE SANS COLLECTEUR**
ANLASSKONTROLLVERFAHREN EINES DREIPHASIGEN KOLLEKTORLOSEN ELEKTRISCHEN SYNCHRONMOTORS
METHOD FOR MONITORING THE STARTING OF A THREE-PHASE SYNCHRONOUS ELECTRIC MOTOR WITH NO COMMUTATOR

(30) Priorité: 09.11.2016 FR 1660873
(43) Date de publication de la demande: 16.05.2018
(73) Titulaire: SEB S.A., 69130 Ecully (FR)
(72) Inventeur: SCHMERBER, Louis, 38150 ROUSSILLON (FR); COUTELLIER, Damien, 69310 PIERRE BENITE (FR)
(74) Mandataire: SEB Développement

(56) Documents cités:
- EP-A2- 0 142 837
- US-A- 5 373 206
- US-A1- 2004 178 757
- US-A1- 2007 159 123
- US-A1- 2016 315 568

## Description

La présente invention se rapporte au domaine technique général des moteurs électriques pour petits appareils électroménager.

Plus particulièrement, la présente invention se rapporte à un procédé de contrôle du démarrage d'un moteur électrique synchrone polyphasé sans collecteur ainsi qu'à ce moteur.

Un moteur électrique synchrone polyphasé sans collecteur comprend généralement :
- un stator comportant des dents autour desquelles sont enroulées des bobines définissant des phases électriques et des pôles magnétiques du stator,
- un rotor disposé concentriquement en regard du stator, ledit rotor comportant un nombre entier de paires de pôles magnétiques définissant la polarisation magnétique du rotor, et
- une carte électronique comprenant un contrôleur agencé pour gérer les commutations du courant dans les différentes phases du stator de manière à définir une polarisation magnétique du stator en rotation et adaptée pour entrainer en rotation le rotor.

Dans un moteur synchrone polyphasé sans collecteur, le rotor tourne à la même vitesse angulaire que la direction de polarisation du stator.

Tant que le couple moteur est voisin du couple exercé par la charge à entraîner alors la rotation du rotor est synchronisée avec la rotation de la polarisation du stator.

Cependant, si le couple exercé par la charge ou le moteur diffère et que les instants de commutation ne sont pas ajustés en conséquence alors le rotor perd le synchronisme.

Après une perte de synchronisme, le rotor se met généralement à osciller sans pouvoir se resynchroniser avec la polarisation variable du stator, ce qui peut provoquer la destruction de ses composants.

Pour éviter cela, le contrôleur doit pouvoir connaitre à chaque instant la position du rotor pour être en mesure de réajuster les instants de commutation si le couple exercé par la charge augmente.

Plus généralement, les instants de commutation doivent être réajustés pendant une phase de décélération du moteur, comme c'est le cas lors de l'application d'une charge, ou bien pendant une phase d'accélération du moteur comme c'est le cas lors du démarrage du moteur.

En effet, lors du démarrage du moteur, le contrôleur doit assurer un démarrage progressif pour accélérer le rotor jusqu'à atteindre une vitesse nominale de rotation du rotor du moteur.

La fréquence de commutation des tensions d'alimentation des bobines du stator sera donc très basse au démarrage, puis augmentée progressivement en tenant compte de la position du rotor qui dépend du couple résistant qui lui est appliqué par la charge.

Ainsi, le fonctionnement d'un moteur à commutation électronique repose sur la détection de position du rotor.

Une mauvaise information de position conduit à une commutation erronée dont les conséquences peuvent être une augmentation brutale du courant dans les bobines du stator entrainant une contrainte voire la rupture de l'électronique, une désaimantation du rotor, une variation brutale ou répétitive du couple entrainant des à-coups et des vibrations, une baisse du couple moyen et une baisse du rendement du moteur en régime permanent.

Pour remédier à ces inconvénients, il est connu de réaliser un moteur électrique synchrone polyphasé sans collecteur comprenant un unique capteur analogique donnant une position absolue du rotor.

Cependant, le coût élevé de ce type de capteur de position n'est pas souhaitable lors d'une production à grande échelle.

Il est également connu, par exemple du document EP0142837A2, d'utiliser des capteurs de position du type logique, notamment à effet Hall ou optique, pour informer le contrôleur sur une position relative du rotor vis-à-vis du stator.

Le coût d'un capteur de position du type logique est bien inférieur au coût d'un capteur de position analogique.

Un tel capteur de position du type logique est disposé dans une position prédéfinie en regard du rotor, et notamment sur la bissectrice entre deux dents du stator, et est destiné à délivrer un signal au contrôleur, ledit signal comprenant des informations sur :
- un sens de la polarisation magnétique du rotor, et
- un instant de bascule d'un sens de polarisation magnétique du rotor à un autre lors de la rotation du rotor.

Typiquement, un tel capteur de position du type logique génère un signal correspondant à une valeur binaire égale à 0 ou 1.

A chacune de ces valeurs binaires correspond un des deux sens de polarisation magnétique du rotor vu par le capteur de position depuis l'endroit où il est positionné.

L'instant de bascule d'un sens de polarisation magnétique du rotor à un autre est quant à lui déduit des instants au cours desquels le capteur de position passe d'une valeur égale à 0 à une valeur égale à 1 autrement appelés fronts montants, et des instants au cours desquels le capteur de position passe d'une valeur égale à 1 à une valeur égale à 0 autrement appelés fronts descendants.

Ces capteurs de position du type logique sont généralement au nombre de trois de manière à avoir une information suffisamment précise sur la position du rotor dès le démarrage du moteur.

L'utilisation de ces capteurs de position du type logique permet le contrôle de la commutation de l'alimentation des phases du stator et par la même la performance nominale et la stabilité du moteur.

Ces capteurs peuvent être disposés sur l'axe du rotor ou bien très près du rotor.

Cependant, leur nombre entraîne un surcoût, un encombrement, et un risque de panne supplémentaire.

Le coût global du moteur est particulièrement affecté par le nombre de capteurs de position utilisés ainsi que par le coût de la carte électronique associée.

Ce coût global inclut le coût des capteurs de position mais inclut également le coût des câblages reliant ces capteurs de position à la carte électronique ainsi que le coût de l'industrialisation associé à l'assemblage de tous ces composants.

Ces moteurs sont généralement destinés à une production en série de petits appareils d'électroménagers.

Ainsi, l'économie pouvant être réalisée sur le coût d'un moteur peut engendrer des économies substantielles sur le coût de production de ces petits appareils électroménagers.

Une des façons pour réduire le coût d'un moteur consiste naturellement à réduire le nombre des capteurs de position du type logique.

Cependant, la quantité d'informations transmise au contrôleur est alors réduite et la commande en basse vitesse est dégradée.

Il est connu du document WO 02/50983 un procédé de démarrage d'un moteur Brushless DC utilisant au plus deux capteurs de position du type logique.

Dans le cas où un seul capteur est utilisé, une première phase prédéterminée du stator est tout d'abord alimentée en continu selon une première polarisation et les deux autres phases sont alimentées alternativement selon une polarisation opposée à celle de la première phase.

Le rotor est alors entrainé en rotation jusqu'à ce que le capteur renvoie un signal donnant une information sur la bascule d'un sens de polarisation magnétique du rotor à un autre.

A partir de cet instant, le contrôleur initie ces commutations pour accélérer le rotor jusqu'à ce qu'il atteigne un seuil de vitesse correspondant au fonctionnement en régime permanent.

Un tel procédé est satisfaisant en ce qu'il permet de démarrer le moteur à l'aide d'un seul capteur de position du type logique.

Cependant, à cet instant la position du rotor présente une incertitude qui influe forcément sur les commutations à venir.

De plus, la vitesse du rotor n'est pas connue ni estimée.

Par conséquent, si la vitesse du rotor est trop élevée et que la commutation initiée par le contrôleur à cet instant n'est pas en phase avec la direction et le sens de polarisation du rotor alors le moteur peut ne pas démarrer ou alors les composants du moteur peuvent subir des contraintes pouvant aller jusqu'à leur destruction

De plus, ce procédé ne permet pas d'assurer un couple optimal ou le couple nécessaire à l'actionnement du moteur et de sa charge durant la phase de démarrage du moteur si l'inertie du moteur et de sa charge est importante ou que la charge nécessite un couple au démarrage proche du couple nominal.

Il est également connu du document EP 1 406 376 A2 un procédé de démarrage d'un moteur Brushless DC utilisant un seul capteur de position du type logique.

Ce procédé consiste à injecter dans les bobines du stator des courants à une faible fréquence et à attendre pendant un temps prédéterminé que le rotor se synchronise sur la vitesse correspondant à la fréquence d'alimentation du stator.

Suite à cette synchronisation, la fréquence d'alimentation du stator est augmentée jusqu'à obtenir une nouvelle synchronisation du rotor.

Le rotor est ainsi accéléré progressivement par une succession de synchronisations jusqu'à ce que le rotor atteigne une vitesse dans laquelle il peut fonctionner en boucle fermée avec les informations fournies par l'unique capteur de position.

Un tel procédé est satisfaisant en ce qu'il permet de démarrer un moteur à l'aide d'un seul capteur de position du type logique.

Cependant, ce procédé implique que le rotor se synchronise immédiatement avec la polarisation magnétique du stator, ce qui peut ne pas être le cas dans certaines circonstances, notamment si une charge est appliquée au rotor.

Dans ce cas, le procédé doit être réinitialisé en augmentant davantage le couple du rotor.

Le document EP0142837A2 divulgue également un procédé de démarrage d'un moteur Brushless DC utilisant un seul capteur de position du type logique.

Ce document présente en outre une étape d'alignement de la direction et du sens de la polarisation du stator déterminée en fonction de l'information lue à partir du capteur de position concernant le sens de la polarisation magnétique du rotor.

Cependant, ici encore la vitesse du rotor autour de la position d'alignement n'est ni connue ni estimée, ce qui amène aux problématiques déjà exposées ci-dessus.

Enfin, il est également connu de disposer de moteurs sans capteurs, dit « sensorless ».

Ces types de moteurs utilisent les bobines du stator qui ne sont pas alimentées au cours de la commutation pour mesurer la force contre électromotrice engendrée par la rotation du rotor et ainsi en déduire le moment pour déclencher la commutation.

Cette solution permet d'éviter l'emploi de capteurs de position du type logique, et permettrait donc théoriquement de réduire le coût de fabrication du moteur.

Cependant, un tel moteur nécessite une refonte totale de la carte électronique et du contrôleur utilisés avec des capteurs de position du type logique.

De plus, au démarrage, la force contre électromotrice est trop faible pour être utilisable. Il faut donc utiliser un autre type d'asservissement pour le démarrage de ce type de moteur sans capteurs.

Généralement, ces moteurs sont démarrés comme des moteurs pas à pas, en commutant les phases du stator à une fréquence croissante prédéfinie, suffisamment lentement pour que le moteur ne décroche pas.

Le couple dans cette phase étant très mauvais, la mise au point de la boucle d'asservissement est très difficile, requiert une puissance de calcul importante et nécessite des solutions de filtrage pour distinguer la force contre électromotrice des courants parasites engendrés par le moteur.

Par ailleurs, ces moteurs présentent une vitesse limitée par rapport aux moteurs munis d'un capteur de position.

En effet, il est difficile de maintenir les performances d'un moteur présentant une forte constante de temps électrique sans information de position du rotor car il est nécessaire d'appliquer une avance de commutation pour compenser le retard de la constante de temps électrique.

Cette avance de commutation empêche de réaliser convenablement la mesure de la force contre électromotrice sur les phases du stator qui ne sont pas alimentées.

Aussi, la présente invention a pour but de résoudre tout ou partie des inconvénients mentionnés ci-dessus, notamment en proposant un moteur avec un unique capteur de position du type logique conservant une carte électronique simple afin de réduire au maximum le coût du moteur et dans lequel la position du rotor serait connue dès le démarrage et estimée par la suite à l'aide des paramètres du moteur et de sa charge permettant ainsi l'application d'un couple voisin du couple maximal dès le démarrage et pouvant atteindre des vitesses de rotation élevées.

A cet effet, l'invention se rapporte à un procédé de contrôle du démarrage d'un moteur électrique synchrone triphasé sans collecteur, ledit moteur comprenant :
- un stator comportant des dents autour desquelles sont enroulées des bobines définissant trois phases électriques dont l'alimentation définit une direction et un sens de la polarisation du stator,
- un rotor disposé concentriquement et en regard du stator, ledit rotor comportant au moins une paire de pôles magnétiques définissant une polarisation magnétique du rotor, et
- une carte électronique comprenant un contrôleur agencé pour réguler la commutation du courant dans les différentes phases du stator de manière à définir une direction variable de polarisation magnétique du stator adaptée pour entrainer en rotation le rotor,
- un unique capteur de position du type logique disposé sur la bissectrice entre deux dents du stator et destiné à délivrer un signal au contrôleur, ledit signal comprenant des informations sur :
   - un sens de polarisation magnétique du rotor, et
   - un instant de bascule d'un sens de polarisation magnétique du rotor à un autre lors de la rotation du rotor,
ledit procédé comprenant une étape d'alignement de la direction et du sens de la polarisation magnétique du rotor avec une position d'alignement définie par la direction et le sens de la polarisation du stator déterminée en fonction de l'information lue à partir du capteur de position concernant le sens de la polarisation magnétique du rotor,
ledit procédé étant caractérisé en ce que l'étape d'alignement présente :
- une durée au bout de laquelle depuis une position de départ quelconque du rotor, le rotor est théoriquement aligné pour la première fois avec la position d'alignement, ou
- une durée au bout de laquelle depuis une position de départ quelconque du rotor l'amplitude des oscillations du rotor autour de la position d'alignement est théoriquement inférieure à un seuil prédéterminé, ou
- une durée au bout de laquelle l'amplitude des oscillations du rotor pour une position de départ théorique la plus éloignée de la position d'alignement est théoriquement dans un intervalle prédéterminé, ou
- une durée au bout de laquelle depuis une position de départ quelconque du rotor la vitesse du rotor autour de la position d'alignement est théoriquement inférieure à un seuil prédéterminé,
au moins une de ces durées théoriques étant renseignées dans une mémoire reliée au contrôleur, ces durées théoriques étant déduites à partir d'un modèle théorique du comportement oscillatoire du rotor autour de la position d'alignement du rotor pour différentes positions de départ du rotor,
ou bien selon une autre alternative l'étape d'alignement présente une durée prédéterminée au bout de laquelle depuis une position de départ quelconque du rotor l'amplitude des oscillations du rotor autour de la position d'alignement est forcément inférieure à un seuil prédéterminé, cette durée étant déterminée expérimentalement et renseignée dans une mémoire reliée au contrôleur.

L'utilisation d'un unique capteur de position du type logique permet de réduire le coût lié à l'électronique mais permet également de diminuer l'encombrement du moteur. Cela permet également d'optimiser l'intégration du capteur de position en simplifiant le carter entourant les pièces magnétiques, ce qui peut permettre par exemple d'augmenter le passage d'air utile pour refroidir le moteur.

Cette étape d'alignement permet d'aligner immédiatement le rotor avec une polarisation magnétique fixe du stator, et cela même si une charge est appliquée au rotor. L'étape d'alignement se base sur le fait que lorsque la direction de polarisation du rotor s'aligne sur une direction prédéterminée de polarisation du stator alors le rotor suit un mouvement oscillatoire amorti qui résout une équation différentielle dont les caractéristiques temporelles dépendent peu de la position de départ.

Etant donné que la solution de l'équation différentielle est représentée par une courbe présentant des oscillations amorties alors l'amplitude de ces oscillations sera forcément inférieure à un seuil déterminé au bout d'une durée déterminée.

L'amortissement du mouvement oscillatoire du rotor autour de la direction prédéterminée de la polarisation du stator permet donc de réduire la vitesse du rotor jusqu'à un seuil prédéterminé permettant davantage de précision pour pouvoir réaliser une commutation ultérieure.

Ainsi, la présente invention tient compte de cet amortissement pour définir un instant à partir duquel la position et la vitesse du moteur sont connues ce qui permet de réduire les contraintes pouvant s'exercer sur les éléments du moteur au cours du démarrage du moteur.

Au cours de l'étape d'alignement, le capteur de position du type logique n'envoie pas forcément une information sur un basculement du sens de la polarisation magnétique du rotor mais envoie forcément au contrôleur une information sur le sens de la polarisation magnétique du rotor vu par le capteur.

Ainsi, au cours de l'étape d'alignement l'indétermination sur la position du rotor est de 180° électrique quel que soit le nombre de paires de pôles magnétiques du rotor.

En outre, ce capteur de position permet au moteur de fonctionner en boucle fermée aux très grandes vitesses et d'appliquer des avances sur les commutations lui garantissant une commande optimale.

Selon une mise en oeuvre du procédé, l'unique capteur de position du type logique est disposé entre une première phase et une deuxième phase du stator, et la direction et le sens de polarisation magnétique du stator sont déterminés de sorte que si le capteur de position présente une première valeur alors la troisième phase du stator est alimentée selon une première polarité, et si le capteur de position présente une deuxième valeur alors la troisième phase du stator est alimentée selon une deuxième polarité.

Selon une mise en oeuvre du procédé, la direction et le sens de polarisation magnétique du stator sont réalisés à partir de l'alimentation des trois phases, la première et la deuxième phase présentant une polarisation opposée par rapport à la polarisation de la troisième phase.

Selon une mise en œuvre du procédé, le seuil prédéterminé est égal à π/6 rad et l'intervalle déterminé est compris de - π/6 rad à π/6 rad autour de la position d'alignement.

La valeur du seuil déterminé est choisie de manière à minimiser l'erreur de position du rotor pour réduire l'influence de cette erreur sur la commutation à venir.

Selon une mise en oeuvre du procédé, la durée prédéterminée de l'étape d'alignement est comprise de 10 microsecondes à 1,50 secondes.

Cette durée est déterminée pour avoir une erreur de position du rotor suffisamment faible pour réduire l'influence de cette erreur sur la commutation à venir.

Selon une mise en œuvre du procédé, le procédé comprend une deuxième étape de lancement du rotor réalisée consécutivement à la première étape d'alignement, et dans laquelle le contrôleur en se basant sur la position d'alignement pour définir une position initiale du rotor à une erreur déterminée près, réalise des commutations successives pour assurer le couple nécessaire à l'augmentation progressive de la vitesse du rotor, les instants de commutations étant réajustés après chaque commutation pour minimiser un décalage temporel avec des instants de commutations théoriques, les instants de commutations théoriques étant déterminés :
- à chaque demi-tour du rotor en fonction de l'information délivrée par le capteur de position du type logique, ou
- à partir d'une valeur de vitesse théorique du rotor estimée à partir d'une méthode d'estimation prenant en compte des paramètres théoriques du moteur et de sa charge et des mesures de tension et de courant consommés par le moteur,
ladite deuxième étape de lancement étant réalisée jusqu'à ce que le moteur puisse fonctionner en régime permanent à l'aide des informations fournies par son unique capteur.

Ce procédé permet d'assurer des instants de commutation fidèles à un modèle théorique du moteur et de sa charge et de corriger et minimiser l'erreur sur les instants de commutation à chaque mesure de changement de polarité sur le capteur, le couple délivré est proche de celui délivré par un moteur polyphasé sans balais possédant un nombre de capteur égal au nombre de phases.

Une des alternatives utilise le capteur de position du type logique pour connaitre la position exacte du rotor à chaque demi-tour.

Selon une mise en œuvre du procédé, au moins la première commutation est réalisée à un couple maximal du rotor.

Cette disposition permet de réduire au maximum le temps de mise en œuvre de la deuxième étape de lancement du rotor.

Selon une mise en œuvre du procédé, la(les) durée(s) totale(s) de la première étape, le cas échéant de la deuxième étape, est(sont) mesurée(s) et comparée(s) à une valeur tabulée ou le cas échéant à des valeurs tabulées pour détecter un état de fonctionnement anormal.

Cette disposition permet de détecter un défaut au démarrage du moteur.

La présente invention se rapporte également à un moteur, ledit moteur comprenant :
- un stator comportant des dents autour desquelles sont enroulées des bobines définissant trois phases électriques dont l'alimentation définit une direction et un sens de la polarisation du stator,
- un rotor disposé concentriquement et en regard du stator, ledit rotor comportant au moins une paire de pôles magnétiques définissant une polarisation magnétique du rotor, et
- une carte électronique comprenant un contrôleur agencé pour réguler la commutation du courant dans les différentes phases du stator de manière à définir une direction variable de polarisation magnétique du stator adaptée pour entrainer en rotation le rotor,
- un unique capteur de position du type logique disposé sur la bissectrice entre deux dents du stator et destiné à délivrer un signal au contrôleur, ledit signal comprenant des informations sur :
   - un sens de polarisation magnétique du rotor, et
   - un instant de bascule d'un sens de polarisation magnétique du rotor à un autre lors de la rotation du rotor,
et une mémoire reliée au contrôleur dans laquelle est enregistrée une durée tabulée de l'étape d'alignement, le cas échéant une durée tabulée de la deuxième étape de lancement du rotor
la carte électronique étant agencée pour aligner la direction et le sens de la polarisation magnétique du rotor avec une position d'alignement définie par la direction et le sens de la polarisation du stator déterminée en fonction de l'information lue à partir du capteur de position concernant le sens de la polarisation magnétique du rotor, ledit moteur étant caractérisé en ce que ledit alignement étant réalisé pendant :
- une durée au bout de laquelle depuis une position de départ quelconque du rotor, le rotor est théoriquement aligné pour la première fois avec la position d'alignement, ou
- une durée au bout de laquelle depuis une position de départ quelconque du rotor l'amplitude des oscillations du rotor autour de la position d'alignement est théoriquement inférieure à un seuil prédéterminé, ou
- une durée au bout de laquelle l'amplitude des oscillations du rotor pour une position de départ théorique la plus éloignée de la position d'alignement est théoriquement dans un intervalle prédéterminé, ou
- une durée au bout de laquelle depuis une position de départ quelconque du rotor la vitesse du rotor autour de la position d'alignement est théoriquement inférieure à un seuil prédéterminé,
au moins une de ces durées théoriques étant renseignées dans une mémoire reliée au contrôleur, ces durées théoriques étant déduites à partir d'un modèle théorique du comportement oscillatoire du rotor autour de la position d'alignement du rotor pour différentes positions de départ du rotor,
ou bien selon une alternative ledit alignement étant réalisé pendant une durée prédéterminée au bout de laquelle depuis une position de départ (P0) quelconque du rotor (5) l'amplitude des oscillations du rotor autour de la position d'alignement est forcément inférieure à un seuil prédéterminé, cette durée étant déterminée expérimentalement et renseignée dans la mémoire.

D'autres avantages et caractéristiques de l'invention ressortiront mieux à la lecture de la description détaillée de l'invention faite à titre illustratif et non limitatif en référence aux figures qui illustrent tout ou partie du procédé de contrôle du démarrage et du moteur selon l'invention.
La figure 1 montre une vue montée et une vue éclatée d'un moteur selon l'invention.
La figure 2 est un graphe qui illustre le mouvement du rotor au cours du temps autour d'une position d'alignement pour différentes positions de départ.
La figure 3 illustre la position relative du rotor par rapport au stator d'un moteur selon l'invention à l'arrêt avant l'étape d'alignement.
La figure 4 illustre le mouvement relatif qu'a réalisé le rotor par rapport au stator du moteur de la figure 3 après l'étape d'alignement.
La figure 5 est un schéma fonctionnel du démarrage d'un moteur selon le procédé de contrôle du démarrage de l'invention.

Seuls les éléments nécessaires à la compréhension de l'invention ont été représentés.

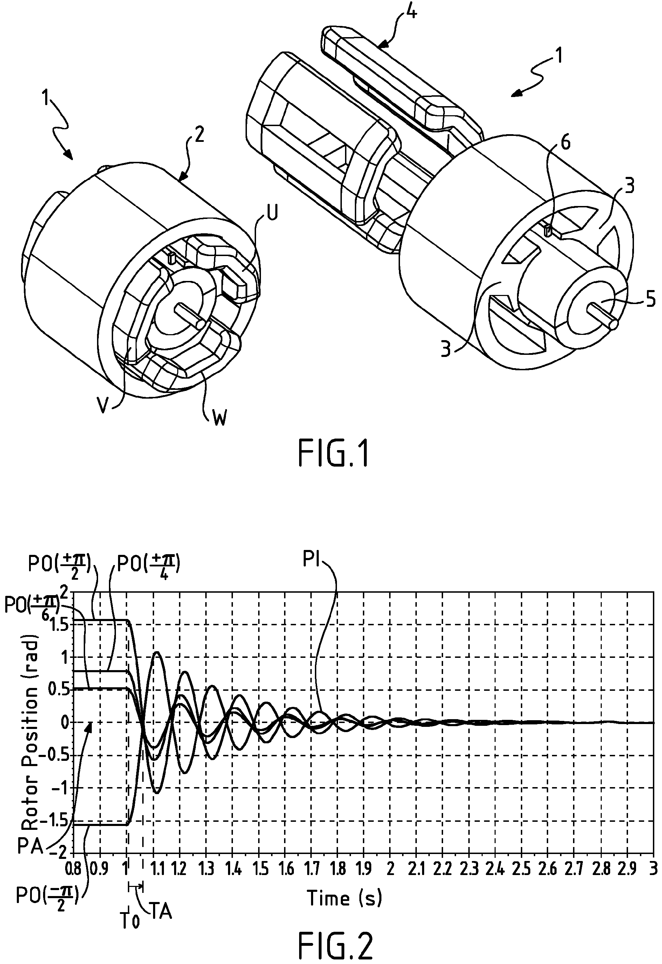

Comme illustré à la figure 1, un moteur électrique 1 synchrone triphasé sans collecteur comprend un stator 2 comportant des dents 3 autour desquelles sont enroulées des bobines 4 définissant trois phases électriques U, V, W dont l'alimentation définit une direction et un sens de la polarisation du stator 2, et un rotor 5 disposé concentriquement et en regard du stator 2, ledit rotor 5 comportant des paires de pôles magnétiques N-S (non représentées) définissant une polarisation magnétique du rotor 5.

Dans l'exemple présenté, le moteur électrique 1 synchrone polyphasé sans collecteur est du type brushless DC avec un rotor 5 disposé à l'intérieur du stator 2. Cependant, le procédé selon l'invention s'applique également à un moteur du type brushless DC avec un rotor disposé à l'extérieur du stator ou à un moteur du type brushless DC avec un rotor en forme de disque et une polarisation axiale du stator.

De même, la présente description se base sur un rotor 5 comprenant une paire de pôles magnétiques N-S. Néanmoins, un autre nombre de paires de pôles magnétiques N-S pourrait être utilisé sans pour autant sortir du cadre de l'invention.

Ces paires de pôles magnétiques sont engendrées par des aimants permanents fixés au corps du rotor 5.

La polarisation magnétique du rotor 5 est intrinsèquement liée au rotor 5, et orientée dans le sens allant du pôle sud vers le pôle nord de ses aimants permanents.

De même, le stator 2 représenté comprend trois phases U, V, W définissant un nombre de paires de pôles identique au rotor.

En effet, ces trois phases U, V, W peuvent soit être alimentées positivement soit être alimentées négativement.

Cependant, le stator 2 pourrait présenter davantage de phases et de pôles magnétiques sans pour autant sortir du cadre de l'invention.

En particulier, les phases du stator 2 peuvent chacune présenter une paire de pôles magnétiques disposés en regard l'un de l'autre et présentant des sens de polarisation opposés lorsque ladite phase est alimentée.

Cette configuration est due au sens de l'enroulement des bobines autour des dents 3 du stator 2 pour une même phase U, V, W.

En outre, le moteur 1 comprend une carte électronique (non illustrée) comprenant un contrôleur (non représenté) agencé pour gérer la commutation du courant dans les différentes phases du stator 2 de manière à définir une direction variable de polarisation magnétique du stator 2 adaptée pour entrainer en rotation le rotor 5 autrement appelé champ tournant.

En régime permanent, des commutations appropriées des phases U, V, W du stator 2 permettent de faire tourner la direction de la polarisation du stator 2 et d'entrainer le rotor 5 dans un mouvement de rotation à vitesse constante.

Pour cela, la direction de la polarisation du stator 2 tendra à conserver une avance de 90° par rapport à la direction de la polarisation du rotor 5 de manière à mettre en mouvement le rotor 5 avec un couple maximal.

Pour connaitre la position du rotor 5, le moteur 1 comprend un unique capteur de position 6 du type logique disposé sur la bissectrice entre deux dents du stator 2 et destiné à délivrer un signal au contrôleur, ledit signal comprenant des informations sur :
- un sens de polarisation magnétique du rotor, et
- un instant de bascule d'un sens de polarisation magnétique du rotor à un autre lors de la rotation du rotor.

Le capteur de position 6 du type logique est par exemple une cellule Hall délivrant une valeur logique Val égale à 1 ou à 0.

Le procédé selon l'invention concerne le démarrage du moteur 1.

Lors de la mise sous tension du moteur 1, les informations délivrées par l'unique capteur de position 6 du type logique ne permettent pas au contrôleur de déterminer suffisamment précisément la position du rotor 5 mais permettent néanmoins de connaitre la direction de polarisation du champ magnétique rotorique vue par ce capteur. Il en est de même aux faibles vitesses. Seuls les instants de changement de polarisation donnent une information plus précise sur la position du rotor.

Pour un moteur à p paires de pôles magnétiques, cette indétermination de position au démarrage est de 180°.

Il est cependant possible de piloter correctement le moteur 1 pour qu'il vienne s'aligner sur une phase déterminée du stator 2 en assurant un couple maximum.

Ainsi, le procédé de contrôle du démarrage selon l'invention comprend une première étape d'alignement de la direction et du sens de la polarisation magnétique du rotor 5 avec une position d'alignement PA définie par la direction et le sens de la polarisation du stator 2.

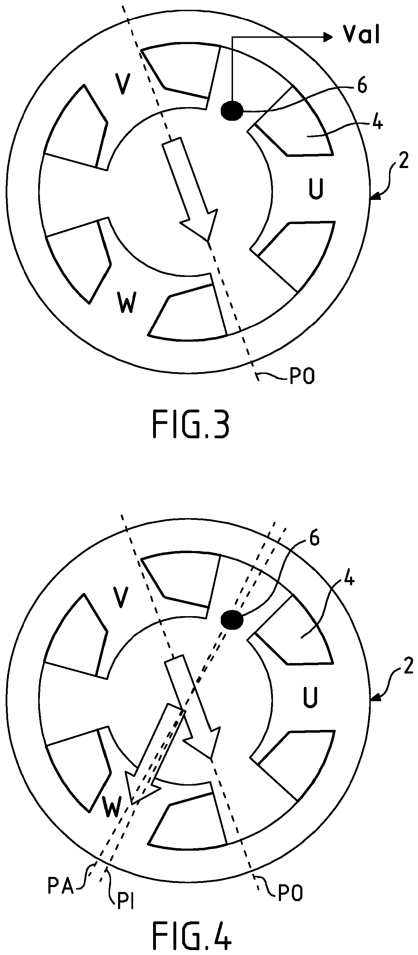

Dans l'exemple présenté à la figure 3, l'unique capteur de position 6 est positionné entre les phases U et V du stator 2 et la position de départ P0 du rotor 5 présente une direction de polarisation du rotor 5 traversant la dent de la phase V et passant entre les dents des phases U et W.

Dans cette configuration, le contrôleur à partir de la valeur du signal que lui renvoie le capteur 6, est en mesure de déterminer la position d'alignement PA optimale du rotor 5 c'est à dire pour laquelle l'incertitude de position de 180° du rotor 5 est ramenée à une incertitude de 90° dans un premier sens de rotation et à 90° dans le deuxième sens de rotation du rotor 5.

Comme illustré à la figure 4, dans l'exemple présenté, cette position d'alignement PA traverse le capteur 6 et la phase W.

Le contrôleur va alors réaliser une commutation des trois phases U, V, W du stator 2 pour générer un champ fixe définissant la direction et le sens de la polarisation du stator 2.

Sous l'action de ce champ fixe, le rotor 5 va engendrer un mouvement de rotation depuis la position de départ P0 vers la position d'alignement PA de manière à ce que la polarisation magnétique du rotor 5 tende à s'aligner avec le champ fixe du stator 2.

Comme illustré à la figure 2, le rotor 5 est entrainé dans un mouvement oscillatoire amorti autour de la position d'alignement PA.

Dans cette position d'alignement PA, la direction adoptée par le champ magnétique du stator 2 traverse la dent d'un pôle de la phase W du stator 2.

Comme illustré à la figure 2, le mouvement du rotor 5 au cours du temps autour de cette position d'alignement PA pour différentes positions de départ P0 présente un mouvement oscillant amorti qui résout une équation différentielle.

En outre, on remarque sur ce graphe que le rotor 5 met une même durée TA depuis un instant de commande T0 pour franchir pour la première fois la position d'alignement PA quelle que soit la position de départ P0 du rotor 5.

Le modèle théorique illustré à la figure 2 renseigne donc sur la durée TA au bout de laquelle depuis une position de départ P0 quelconque du rotor 5, le rotor 5 est théoriquement aligné pour la première fois avec la position d'alignement PA.

Ce modèle théorique renseigne également sur une durée au bout de laquelle depuis une position de départ P0 quelconque du rotor 5 l'amplitude des oscillations du rotor 5 autour de la position d'alignement PA est théoriquement inférieure à un seuil prédéterminé ou bien une durée au bout de laquelle l'amplitude des oscillations du rotor 5 pour une position de départ P0 théorique la plus éloignée de la position d'alignement PA est théoriquement dans un intervalle prédéterminé ou sur une durée au bout de laquelle depuis une position de départ quelconque du rotor 5 la vitesse du rotor 5 autour de la position d'alignement PA est théoriquement inférieure à un seuil prédéterminé.

De même, étant donné que le mouvement oscillatoire est amorti alors il est possible de déterminer expérimentalement une durée prédéterminée au bout de laquelle depuis une position de départ P0 quelconque du rotor 5 l'amplitude des oscillations du rotor 5 autour de la position d'alignement PA est forcément inférieure à un seuil prédéterminé.

Au moins une de ces durées est enregistrée dans une mémoire non volatile (non illustrée) disposée sur la carte électronique et reliée au contrôleur.

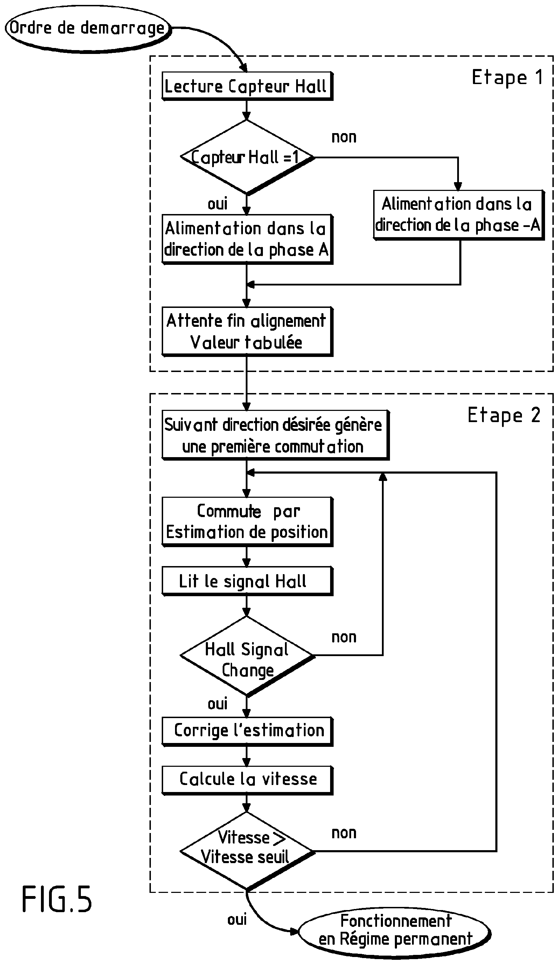

Comme illustré à la figure 5, tant que le seuil prédéterminé n'est pas franchi ou bien tant que l'amplitude des oscillations n'est pas dans un intervalle prédéterminé, le contrôleur attend simplement.

Le seuil prédéterminé est par exemple égal à π/6 rad et l'intervalle déterminé est compris de - π/6 rad à π/6 rad autour de la position d'alignement PA.

Typiquement, la durée prédéterminée de l'étape d'alignement pour un tel seuil ou intervalle déterminé est comprise de 10 microsecondes à 1,50 secondes.

A ce moment là, l'imprécision de positionnement angulaire du rotor 5 est réduite à un intervalle de π/3 radians autour de la position d'alignement PA.

Il est donc possible avec une erreur faible de commander le moteur 1 à couple maximum afin de le faire tourner dans le sens de rotation désiré et avec le meilleur couple.

Comme illustré à la figure 5, à la fin de la première étape marquée par le franchissement d'un seuil prédéterminé ou l'entrée dans un intervalle prédéterminé, une deuxième étape de lancement du rotor 5 est réalisée.

Au cours de cette deuxième étape le contrôleur en se basant sur la position d'alignement PA pour définir une position initiale PI du rotor 5 à une erreur déterminée près, réalise des commutations successives pour augmenter progressivement la vitesse du rotor 5.

Ces commutations sont effectuées :
- à chaque demi-tour du rotor 5 en fonction de l'information délivrée par le capteur de position 6 du type logique, ou
- à partir d'une valeur de vitesse théorique du rotor estimée à partir d'une méthode d'estimation prenant en compte des paramètres théoriques du moteur 1 et des mesures de tension et de courant consommés par le moteur.

Une telle méthode d'estimation peut par exemple se baser sur l'utilisation d'un estimateur d'état du moteur 1 ou d'un filtre de Kalman ou simplement utiliser des valeurs de temporisations tabulées.

Comme illustré à la figure 5 pour la variante utilisant l'estimation des instants de commutations, ces commutations sont effectuées jusqu'à ce qu'un signal Hall soit lu. Si le signal Hall n'est pas lu avant un temps de sécurité alors le moteur est considéré à l'arrêt et le démarrage s'arrête.

Lorsque le signal Hall est lu il indique avec certitude la position du rotor et permet de réactualiser l'estimateur d'état du moteur 1 et de corriger les instants de commutation afin de réduire les risques d'erreur.

Cependant, lors de la détection du capteur de position 6 du type logique le sens de rotation et la position exacte du rotor 5 sont connus mais pas la vitesse du rotor.

En se basant sur cette estimation de position, le contrôleur accélère alors le rotor 5 selon un couple désiré jusqu'à atteindre une vitesse dans laquelle le moteur 1 peut fonctionner en boucle fermée à partir des seules informations que le capteur de position 6 du type logique communique au contrôleur.

Le couple dépend du courant dans les bobines du stator 2 et est régulé typiquement par modulation de la largeur d'impulsion (PWM) et les instants de commutation.

L'erreur de commutation doit toujours rester minimale, ce qui suppose de connaitre la position du rotor 5.

Pour la commande du moteur au couple désiré, deux méthodes sont possibles.

La première méthode consiste à déterminer les instants de commutation à partir d'instants de commutation tabulés sur l'usage du moteur 1.

La deuxième méthode consiste à déterminer les instants de commutation à partir d'une estimation de la vitesse du rotor 5 déterminée à partir d'une méthode d'estimation basée sur la mesure de tension et de courant dans les bobines du stator 2 et corrigée par le signal de l'unique capteur de position 6.

Cette deuxième méthode permet d'estimer avec une grande précision la vitesse du moteur.

Par conséquent, connaissant avec précision la position du rotor lors de la commutation précédente du capteur 6, la position à tout instant peut être calculée par le contrôleur.

Il est donc possible de connaitre la position à tout instant du rotor 5 et ainsi piloter l'accélération avec une précision au moins égale à un moteur équipé de trois capteurs de position.

Comme illustré à la figure 5 cette accélération est réalisée jusqu'à ce que la vitesse déduite par les informations délivrées par le capteur de position 6 du type logique au contrôleur soit représentative d'une vitesse seuil de consigne.

Cette vitesse seuil de consigne peut correspondre à une vitesse nominale du moteur ou bien à une vitesse sélectionnée par l'utilisateur par l'intermédiaire d'un variateur.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention tel que défini par les revendications.

## Revendications

1. Procédé de contrôle du démarrage d'un moteur électrique (1) synchrone triphasé sans collecteur, ledit moteur (1) comprenant :
- un stator (2) comportant des dents (3) autour desquelles sont enroulées des bobines (4) définissant trois phases électriques (U, V, W) dont l'alimentation définit une direction et un sens de la polarisation du stator (2),
- un rotor (5) disposé concentriquement et en regard du stator (2), ledit rotor (5) comportant au moins une paire de pôles magnétiques définissant une polarisation magnétique du rotor (5), et
- une carte électronique comprenant un contrôleur agencé pour réguler la commutation du courant dans les différentes phases du stator (2) de manière à définir une direction variable de polarisation magnétique du stator (2) adaptée pour entrainer en rotation le rotor (5),
- un unique capteur de position (6) du type logique disposé sur la bissectrice entre deux dents du stator et destiné à délivrer un signal au contrôleur, ledit signal comprenant des informations sur :
- un sens de polarisation magnétique du rotor, et
- un instant de bascule d'un sens de polarisation magnétique du rotor à un autre lors de la rotation du rotor (5),
ledit procédé comprenant une étape d'alignement de la direction et du sens de la polarisation magnétique du rotor (5) avec une position d'alignement (PA) définie par la direction et le sens de la polarisation du stator (2) déterminée en fonction de l'information lue à partir du capteur de position concernant le sens de la polarisation magnétique du rotor,
ledit procédé étant **caractérisé en ce que** l'étape d'alignement présente :
- une durée (TA) au bout de laquelle depuis une position de départ (P0) quelconque du rotor (5), le rotor (5) est théoriquement aligné pour la première fois avec la position d'alignement (PA), ou
- une durée au bout de laquelle depuis une position de départ quelconque du rotor (5) l'amplitude des oscillations du rotor (5) autour de la position d'alignement (PA) est théoriquement inférieure à un seuil prédéterminé, ou
- une durée au bout de laquelle l'amplitude des oscillations du rotor (5) pour une position de départ théorique la plus éloignée de la position d'alignement (PA) est théoriquement dans un intervalle prédéterminé, ou
- une durée au bout de laquelle depuis une position de départ quelconque du rotor (5) la vitesse du rotor (5) autour de la position d'alignement (PA) est théoriquement inférieure à un seuil prédéterminé,
au moins une de ces durées théoriques étant renseignées dans une mémoire reliée au contrôleur, ces durées théoriques étant déduites à partir d'un modèle théorique du comportement oscillatoire du rotor (5) autour de la position d'alignement (PA) du rotor (5) pour différentes positions de départ (P0) du rotor (5).

2. Procédé de contrôle du démarrage d'un moteur électrique (1) synchrone triphasé sans collecteur, ledit moteur (1) comprenant :
- un stator (2) comportant des dents (3) autour desquelles sont enroulées des bobines (4) définissant trois phases électriques (U, V, W) dont l'alimentation définit une direction et un sens de la polarisation du stator (2),
- un rotor (5) disposé concentriquement et en regard du stator (2), ledit rotor (5) comportant au moins une paire de pôles magnétiques définissant une polarisation magnétique du rotor (5), et
- une carte électronique comprenant un contrôleur agencé pour réguler la commutation du courant dans les différentes phases du stator (2) de manière à définir une direction variable de polarisation magnétique du stator (2) adaptée pour entrainer en rotation le rotor (5),
- un unique capteur de position (6) du type logique disposé sur la bissectrice entre deux dents du stator et destiné à délivrer un signal au contrôleur, ledit signal comprenant des informations sur :
- un sens de polarisation magnétique du rotor, et
- un instant de bascule d'un sens de polarisation magnétique du rotor à un autre lors de la rotation du rotor (5),
ledit procédé comprenant une étape d'alignement de la direction et du sens de la polarisation magnétique du rotor (5) avec une position d'alignement (PA) définie par la direction et le sens de la polarisation du stator (2) déterminée en fonction de l'information lue à partir du capteur de position concernant le sens de la polarisation magnétique du rotor,
ledit procédé étant **caractérisé en ce que** l'étape d'alignement présente une durée prédéterminée au bout de laquelle depuis une position de départ (P0) quelconque du rotor (5) l'amplitude des oscillations du rotor autour de la position d'alignement est forcément inférieure à un seuil prédéterminé, cette durée étant déterminée expérimentalement et renseignée dans une mémoire reliée au contrôleur.

3. Procédé de contrôle selon l'une des revendications 1 ou 2, dans lequel l'unique capteur de position (6) du type logique est disposé entre une première phase et une deuxième phase du stator, et la direction et le sens de polarisation magnétique du stator sont déterminés de sorte que si le capteur de position présente une première valeur alors la troisième phase du stator est alimentée selon une première polarité, et si le capteur de position présente une deuxième valeur alors la troisième phase du stator est alimentée selon une deuxième polarité.

4. Procédé de contrôle selon la revendication 3, dans lequel la direction et le sens de polarisation magnétique du stator sont réalisés à partir de l'alimentation des trois phases, la première et la deuxième phase présentant une polarisation opposée par rapport à la polarisation de la troisième phase.

5. Procédé de contrôle selon l'une des revendications 1 ou 3 à 4, dans lequel le seuil prédéterminé est égal à π/6 rad et l'intervalle déterminé est compris de - π/6 rad à π/6 rad autour de la position d'alignement (PA).

6. Procédé de contrôle selon l'une des revendications 1 ou 3 à 5, dans lequel la durée prédéterminée de l'étape d'alignement est comprise de 10 microsecondes à 1,50 secondes.

7. Procédé de contrôle selon l'une des revendications 1 à 6 comprenant une deuxième étape de lancement du rotor (5) réalisée consécutivement à la première étape d'alignement, et dans laquelle le contrôleur en se basant sur la position d'alignement (PA) pour définir une position initiale (PI) du rotor (5) à une erreur déterminée près, réalise des commutations successives pour assurer le couple nécessaire à l'augmentation progressive de la vitesse du rotor (5), les instants de commutations étant réajustés après chaque commutation pour minimiser un décalage temporel (Δt) avec des instants de commutation théoriques, les instants de commutation théoriques étant déterminés :
- à chaque demi-tour du rotor (5) en fonction de l'information délivrée par le capteur de position (6) du type logique, ou
- à partir d'une valeur de vitesse théorique du rotor (5) estimée à partir d'une méthode d'estimation prenant en compte des paramètres théoriques du moteur (1) et de sa charge et des mesures de tension et de courant consommés par le moteur,
ladite deuxième étape de lancement étant réalisée jusqu'à ce que le moteur puisse fonctionner en régime permanent à l'aide des informations fournies par son unique capteur.

8. Procédé de contrôle selon la revendication 7, dans lequel au moins la première commutation est réalisée à un couple maximal du rotor.

9. Procédé de contrôle selon l'une des revendications précédentes, dans lequel la(les) durée(s) totale(s) de la première étape, le cas échéant de la deuxième étape, est(sont) mesurée(s) et comparée(s) à une valeur tabulée ou le cas échéant à des valeurs tabulées pour détecter un état de fonctionnement anormal.

10. Moteur (1) comprenant :
- un stator (2) comportant des dents (3) autour desquelles sont enroulées des bobines (4) définissant trois phases électriques (U, V, W) dont l'alimentation définit une direction et un sens de la polarisation du stator (2),
- un rotor (5) disposé concentriquement et en regard du stator (2), ledit rotor (5) comportant au moins une paire de pôles magnétiques définissant une polarisation magnétique du rotor (5), et
- une carte électronique comprenant un contrôleur agencé pour réguler la commutation du courant dans les différentes phases du stator (2) de manière à définir une direction variable de polarisation magnétique du stator (2) adaptée pour entrainer en rotation le rotor (5),
- un unique capteur de position (6) du type logique disposé sur la bissectrice entre deux dents du stator et destiné à délivrer un signal au contrôleur, ledit signal comprenant des informations sur :
- un sens de polarisation magnétique du rotor, et
- un instant de bascule d'un sens de polarisation magnétique du rotor à un autre lors de la rotation du rotor (5),
et une mémoire reliée au contrôleur dans laquelle est enregistrée une durée tabulée de l'étape d'alignement, le cas échéant une durée tabulée de la deuxième étape de lancement du rotor,
la carte électronique étant agencée pour aligner la direction et le sens de la polarisation magnétique du rotor (5) avec une position d'alignement (PA) définie par la direction et le sens de la polarisation du stator (2) déterminée en fonction de l'information lue à partir du capteur de position concernant le sens de la polarisation magnétique du rotor, ledit moteur étant **caractérisé en ce que** ledit alignement étant réalisé pendant :
- une durée (TA) au bout de laquelle depuis une position de départ (P0) quelconque du rotor (5), le rotor (5) est théoriquement aligné pour la première fois avec la position d'alignement (PA), ou
- une durée au bout de laquelle depuis une position de départ quelconque du rotor (5) l'amplitude des oscillations du rotor (5) autour de la position d'alignement (PA) est théoriquement inférieure à un seuil prédéterminé, ou
- une durée au bout de laquelle l'amplitude des oscillations du rotor (5) pour une position de départ théorique la plus éloignée de la position d'alignement (PA) est théoriquement dans un intervalle prédéterminé, ou
- une durée au bout de laquelle depuis une position de départ quelconque du rotor (5) la vitesse du rotor (5) autour de la position d'alignement (PA) est théoriquement inférieure à un seuil prédéterminé,
au moins une de ces durées théoriques étant renseignées dans une mémoire reliée au contrôleur, ces durées théoriques étant déduites à partir d'un modèle théorique du comportement oscillatoire du rotor (5) autour de la position d'alignement (PA) du rotor (5) pour différentes positions de départ (P0) du rotor (5).

11. Moteur (1) comprenant :
- un stator (2) comportant des dents (3) autour desquelles sont enroulées des bobines (4) définissant trois phases électriques (U, V, W) dont l'alimentation définit une direction et un sens de la polarisation du stator (2),
- un rotor (5) disposé concentriquement et en regard du stator (2), ledit rotor (5) comportant au moins une paire de pôles magnétiques définissant une polarisation magnétique du rotor (5), et
- une carte électronique comprenant un contrôleur agencé pour réguler la commutation du courant dans les différentes phases du stator (2) de manière à définir une direction variable de polarisation magnétique du stator (2) adaptée pour entrainer en rotation le rotor (5),
- un unique capteur de position (6) du type logique disposé sur la bissectrice entre deux dents du stator et destiné à délivrer un signal au contrôleur, ledit signal comprenant des informations sur :
- un sens de polarisation magnétique du rotor, et
- un instant de bascule d'un sens de polarisation magnétique du rotor à un autre lors de la rotation du rotor (5),
et une mémoire reliée au contrôleur dans laquelle est enregistrée une durée tabulée de l'étape d'alignement, le cas échéant une durée tabulée de la deuxième étape de lancement du rotor,
la carte électronique étant agencée pour aligner la direction et le sens de la polarisation magnétique du rotor (5) avec une position d'alignement (PA) définie par la direction et le sens de la polarisation du stator (2) déterminée en fonction de l'information lue à partir du capteur de position concernant le sens de la polarisation magnétique du rotor, ledit moteur étant **caractérisé en ce que** ledit alignement étant réalisé pendant une durée prédéterminée au bout de laquelle depuis une position de départ (P0) quelconque du rotor (5) l'amplitude des oscillations du rotor autour de la position d'alignement est forcément inférieure à un seuil prédéterminé, cette durée étant déterminée expérimentalement et renseignée dans la mémoire.

## Patentansprüche

1. Verfahren zum Steuern des Starts eines dreiphasigen synchronen Elektromotors (1) ohne Kommutator, wobei der Motor (1) Folgendes umfasst:
- einen Stator (2) mit Zähnen (3), um die Spulen (4) gewickelt sind, die drei elektrische Phasen (U, V, W) definieren, deren Stromversorgung eine Richtung und eine Polarisationsrichtung des Stators (2) definiert,
- einen Rotor (5), der konzentrisch angeordnet ist und dem Stator (2) zugewandt ist, wobei der besagte Rotor (5) mindestens ein Paar magnetischer Pole umfasst, die eine magnetische Polarisation des Rotors (5) definieren, und
- eine elektronische Karte, die eine Steuerung umfasst, die ausgebildet ist, um das Schalten des Stroms in den verschiedenen Phasen des Stators (2) zu regulieren, um eine variable Richtung der magnetischen Polarisation des Stators (2) zu definieren, die geeignet ist, den Rotor (5) in Drehung zu versetzen,
- einen einzigen Positionssensor (6) vom logischen Typ, der auf der Winkelhalbierenden zwischen zwei Zähnen des Stators angeordnet ist und dazu bestimmt ist, ein Signal an die Steuerung zu liefern, wobei das besagte Signal Informationen über Folgendes umfasst:
- eine Richtung der magnetischen Polarisation des Rotors, und
- einen Zeitpunkt des Kippens von einer Richtung der magnetischen Polarisation des Rotors in eine andere während der Drehung des Rotors (5),
wobei das besagte Verfahren einen Schritt des Ausrichtens der Richtung und der Richtung der magnetischen Polarisation des Rotors (5) mit einer Ausrichtungsposition (PA) umfasst, die durch die Richtung und die Richtung der Polarisation des Stators (2) definiert ist, die gemäß den Informationen vom Positionssensor bezüglich der Richtung der magnetischen Polarisation des Rotors bestimmt wird,
wobei das besagte Verfahren **dadurch gekennzeichnet ist, dass** der Ausrichtungsschritt Folgendes umfasst:
- eine Dauer (TA), an deren Ende, ausgehend von einer beliebigen Ausgangsposition (PO) des Rotors (5), der Rotor (5) theoretisch erstmals mit der Ausrichtungsposition (PA) ausgerichtet ist, oder
- eine Dauer, an deren Ende, ausgehend von einer beliebigen Ausgangsposition des Rotors (5), die Amplitude der Schwingungen des Rotors (5) um die Ausrichtungsposition (PA) theoretisch kleiner als ein vorgegebener Schwellenwert ist, oder
- eine Dauer, an deren Ende die Amplitude der Schwingungen des Rotors (5) für eine theoretische Ausgangsposition, die von der Ausrichtungsposition (PA) am weitesten entfernt ist, theoretisch innerhalb eines vorgegebenen Intervalls liegt, oder
- eine Dauer, an deren Ende, ausgehend von einer beliebigen Ausgangsposition des Rotors (5), die Geschwindigkeit des Rotors (5) um die Ausrichtungsposition (PA) herum theoretisch kleiner ist als ein vorgegebener Schwellenwert,
wobei zumindest eine dieser theoretischen Dauern in einem mit dem Steuergerät verbundenen Speicher gespeichert ist, wobei diese theoretischen Dauern aus einem theoretischen Modell des Schwingungsverhaltens des Rotors (5) um die Ausrichtungsposition (PA) des Rotors (5) für verschiedene Ausgangspositionen (PO) des Rotors (5) abgeleitet sind.

2. Verfahren zum Steuern des Starts eines dreiphasigen synchronen Elektromotors (1) ohne Kommutator, wobei der Motor (1) Folgendes umfasst:
- einen Stator (2) mit Zähnen (3), um die Spulen (4) gewickelt sind, die drei elektrische Phasen (U, V, W) definieren, deren Stromversorgung eine Richtung und eine Polarisationsrichtung des Stators (2) definiert,
- einen Rotor (5), der konzentrisch angeordnet ist und dem Stator (2) zugewandt ist, wobei der besagte Rotor (5) mindestens ein Paar magnetischer Pole umfasst, die eine magnetische Polarisation des Rotors (5) definieren, und
- eine elektronische Karte, die eine Steuerung umfasst, die ausgebildet ist, um das Schalten des Stroms in den verschiedenen Phasen des Stators (2) zu regulieren, um eine variable Richtung der magnetischen Polarisation des Stators (2) zu definieren, die geeignet ist, den Rotor (5) in Drehung zu versetzen,
- einen einzigen Positionssensor (6) vom logischen Typ, der auf der Winkelhalbierenden zwischen zwei Zähnen des Stators angeordnet ist und dazu bestimmt ist, ein Signal an die Steuerung zu liefern, wobei das besagte Signal Informationen über Folgendes umfasst:
- eine Richtung der magnetischen Polarisation des Rotors, und
- einen Zeitpunkt des Kippens von einer Richtung der magnetischen Polarisation des Rotors in eine andere während der Drehung des Rotors (5),
wobei das besagte Verfahren einen Schritt des Ausrichtens der Richtung und der Richtung der magnetischen Polarisation des Rotors (5) mit einer Ausrichtungsposition (PA) umfasst, die durch die Richtung und die Richtung der Polarisation des Stators (2) definiert ist, die gemäß den Informationen vom Positionssensor bezüglich der Richtung der magnetischen Polarisation des Rotors bestimmt wird,
wobei besagtes Verfahren **dadurch gekennzeichnet ist, dass** der Ausrichtungsschritt eine vorgegebene Dauer aufweist, an deren Ende, ausgehend von einer beliebigen Ausgangsposition (PO) des Rotors, (5) die Amplitude der Schwingungen des Rotors um die Ausrichtungsposition notwendigerweise kleiner als ein vorgegebener Schwellenwert ist, wobei diese Dauer experimentell bestimmt und in einem mit der Steuerung verbundenen Speicher gespeichert wird.

3. Steuerungsverfahren nach einem der Ansprüche 1 oder 2, worin der einzige Positionssensor (6) vom logischen Typ zwischen einer ersten Phase und einer zweiten Phase des Stators angeordnet ist und die Richtung und die Richtung der magnetischen Polarisation des Stators so bestimmt werden, dass, wenn der Positionssensor einen ersten Wert aufweist, die dritte Phase des Stators mit einer ersten Polarität versorgt wird, und, wenn der Positionssensor einen zweiten Wert aufweist, die dritte Phase des Stators mit einer zweiten Polarität versorgt wird.

4. Steuerungsverfahren nach Anspruch 3, worin die Richtung und die Richtung der magnetischen Polarisation des Stators ausgehend von der Stromversorgung der drei Phasen realisiert werden, wobei die erste und die zweite Phase eine entgegengesetzte Polarisation bezüglich der Polarisation der dritten Phase aufweisen.

5. Steuerungsverfahren nach einem der Ansprüche 1 oder 3 bis 4, worin der vorgegebene Schwellenwert gleich π/6 rad ist und das bestimmte Intervall zwischen - π/6 rad und π/6 rad um die Ausrichtungsposition (PA) herum liegt.

6. Steuerungsverfahren nach einem der Ansprüche 1 oder 3 bis 5, worin die vorgegebene Dauer des Ausrichtungsschritts zwischen 10 Mikrosekunden und 1,50 Sekunden liegt.

7. Steuerungsverfahren nach einem der Ansprüche 1 bis 6, das einen zweiten Schritt des Starts des Rotors (5) umfasst, der nach dem ersten Ausrichtungsschritt durchgeführt wird, und worin die Steuerung, basierend auf der Ausrichtungsposition (PA), um eine Ausgangsstellung (PI) des Rotors (5) auf einen bestimmten Fehler genau zu definieren, aufeinanderfolgende Schaltvorgänge durchführt, um das Drehmoment sicherzustellen, das für die fortschreitende Erhöhung der Drehzahl des Rotors (5) erforderlich ist, wobei die Schaltzeitpunkte nach jedem Schaltvorgang neu eingestellt werden, um einen Zeitversatz (Δt) mit theoretischen Schaltzeitpunkten zu minimieren, wobei die theoretischen Schaltzeitpunkte bestimmt werden:
- bei jeder Halbdrehung des Rotors (5) in Abhängigkeit von den vom Positionssensor (6) vom logischen Typ gelieferten Informationen oder
- auf der Grundlage eines theoretischen Drehzahlwerts des Rotors (5), der auf der Grundlage eines Schätzverfahrens unter Berücksichtigung der theoretischen Parameter des Motors (1) und seiner Last sowie der vom Motor verbrauchten Spannungs- und Strommesswerte geschätzt wird,
wobei der besagte zweite Startschritt durchgeführt wird, bis der Motor im Dauerbetrieb unter Verwendung der von seinem einzigen Sensor bereitgestellten Informationen arbeiten kann.

8. Steuerungsverfahren nach Anspruch 7, worin zumindest das erste Schalten bei einem maximalen Drehmoment des Rotors durchgeführt wird.

9. Steuerungsverfahren nach einem der vorstehenden Ansprüche, worin die Gesamtdauer(n) des ersten Schritts, gegebenenfalls des zweiten Schritts, gemessen und mit einem Tabellenwert oder gegebenenfalls mit Tabellenwerten verglichen wird/werden, um einen abnormalen Betriebszustand zu erkennen.

10. Motor (1), der Folgendes umfasst:
- einen Stator (2) mit Zähnen (3), um die Spulen (4) gewickelt sind, die drei elektrische Phasen (U, V, W) definieren, deren Stromversorgung eine Richtung und eine Polarisationsrichtung des Stators (2) definiert,
- einen Rotor (5), der konzentrisch angeordnet ist und dem Stator (2) zugewandt ist, wobei der besagte Rotor (5) mindestens ein Paar magnetischer Pole umfasst, die eine magnetische Polarisation des Rotors (5) definieren, und
- eine elektronische Karte, die eine Steuerung umfasst, die ausgebildet ist, um das Schalten des Stroms in den verschiedenen Phasen des Stators (2) zu regulieren, um eine variable Richtung der magnetischen Polarisation des Stators (2) zu definieren, die geeignet ist, den Rotor (5) in Drehung zu versetzen,
- einen einzigen Positionssensor (6) vom logischen Typ, der auf der Winkelhalbierenden zwischen zwei Zähnen des Stators angeordnet ist und dazu bestimmt ist, ein Signal an die Steuerung zu liefern, wobei das besagte Signal Informationen über Folgendes umfasst:
- eine Richtung der magnetischen Polarisation des Rotors, und
- einen Zeitpunkt des Kippens von einer Richtung der magnetischen
Polarisation des Rotors in eine andere während der Drehung des Rotors (5), und einen mit dem Steuergerät verbundenen Speicher, worin eine tabellarische Dauer des Ausrichtungsschritts, gegebenenfalls eine tabellarische Dauer des zweiten Schritts des Rotorstarts, gespeichert ist,
wobei die elektronische Karte ausgebildet ist, um die Richtung und die Richtung der magnetischen Polarisation des Rotors (5) mit einer Ausrichtungsposition (PA) auszurichten, die durch die Richtung und die Richtung der Polarisation des Stators (2) definiert ist, die in Abhängigkeit von den Informationen vom Positionssensor bezüglich der Richtung der magnetischen Polarisation des Rotors bestimmt wird, wobei besagter Motor **dadurch gekennzeichnet ist, dass** besagte Ausrichtung durchgeführt wird während:
- eine Dauer (TA), an deren Ende, ausgehend von einer beliebigen Ausgangsposition (PO) des Rotors (5), der Rotor (5) theoretisch erstmals mit der Ausrichtungsposition (PA) ausgerichtet ist, oder
- eine Dauer, an deren Ende, ausgehend von einer beliebigen Ausgangsposition des Rotors (5), die Amplitude der Schwingungen des Rotors (5) um die Ausrichtungsposition (PA) theoretisch kleiner als ein vorgegebener Schwellenwert ist, oder
- eine Dauer, an deren Ende die Amplitude der Schwingungen des Rotors (5) für eine theoretische Ausgangsposition, die von der Ausrichtungsposition (PA) am weitesten entfernt ist, theoretisch innerhalb eines vorgegebenen Intervalls liegt, oder
- eine Dauer, an deren Ende, ausgehend von einer beliebigen Ausgangsposition des Rotors (5), die Geschwindigkeit des Rotors (5) um die Ausrichtungsposition (PA) herum theoretisch kleiner ist als ein vorgegebener Schwellenwert,
wobei zumindest eine dieser theoretischen Dauern in einem mit dem Steuergerät verbundenen Speicher gespeichert ist, wobei diese theoretischen Dauern aus einem theoretischen Modell des Schwingungsverhaltens des Rotors (5) um die Ausrichtungsposition (PA) des Rotors (5) für verschiedene Ausgangspositionen (PO) des Rotors (5) abgeleitet sind.

11. Motor (1), der Folgendes umfasst:
- einen Stator (2) mit Zähnen (3), um die Spulen (4) gewickelt sind, die drei elektrische Phasen (U, V, W) definieren, deren Stromversorgung eine Richtung und eine Polarisationsrichtung des Stators (2) definiert,
- einen Rotor (5), der konzentrisch angeordnet ist und dem Stator (2) zugewandt ist, wobei der besagte Rotor (5) mindestens ein Paar magnetischer Pole umfasst, die eine magnetische Polarisation des Rotors (5) definieren, und
- eine elektronische Karte, die eine Steuerung umfasst, die ausgebildet ist, um das Schalten des Stroms in den verschiedenen Phasen des Stators (2) zu regulieren, um eine variable Richtung der magnetischen Polarisation des Stators (2) zu definieren, die geeignet ist, den Rotor (5) in Drehung zu versetzen,
- einen einzigen Positionssensor (6) vom logischen Typ, der auf der Winkelhalbierenden zwischen zwei Zähnen des Stators angeordnet ist und dazu bestimmt ist, ein Signal an die Steuerung zu liefern, wobei das besagte Signal Informationen über Folgendes umfasst:
- eine Richtung der magnetischen Polarisation des Rotors, und
- einen Zeitpunkt des Kippens von einer Richtung der magnetischen Polarisation des Rotors in eine andere während der Drehung des Rotors (5),
und einen mit dem Steuergerät verbundenen Speicher, worin eine tabellarische Dauer des Ausrichtungsschritts, gegebenenfalls eine tabellarische Dauer des zweiten Schritts des Rotorstarts, gespeichert ist,
wobei die elektronische Karte so ausgebildet ist, dass sie die Richtung und die Richtung der magnetischen Polarisation des Rotors (5) mit einer Ausrichtungsposition (PA) ausrichtet, die durch die Richtung und die Richtung der Polarisation des Stators (2) definiert ist, die in Abhängigkeit von den Informationen von dem Positionssensor bezüglich der Richtung der magnetischen Polarisation des Rotors bestimmt wird, wobei besagter Motor **dadurch gekennzeichnet ist, dass** besagte Ausrichtung während einer vorgegebenen Zeitdauer durchgeführt wird, nach der, ausgehend von einer beliebigen Ausgangsposition (PO) des Rotors (5), die Amplitude der Schwingungen des Rotors um die Ausrichtungsposition notwendigerweise kleiner als ein vorgegebener Schwellenwert ist, wobei diese Dauer experimentell bestimmt und im Speicher gespeichert wird.

## Claims

1. Method for monitoring the starting of a three-phase synchronous motor (1) with no commutator, said motor (1) comprising:
- a stator (2) comprising teeth (3) around which coils (4) are wound, defining three electric phases (U, V, W), the supply of which defines a direction and a course of the polarisation of the stator (2),
- a rotor (5) disposed concentrically and facing the stator (2), said rotor (5) comprising at least one pair of magnetic poles defining a magnetic polarisation of the rotor (5), and
- an electronic board comprising a controller arranged to adjust the switching of the current in the different phases of the stator (2) so as to define a variable direction of magnetic polarisation of the stator (2) adapted to rotate the rotor (5),
- one single position sensor (6) of the logical type disposed on the bisector between two teeth of the stator and intended to deliver a signal to the controller, said signal comprising information on:
- a course of magnetic polarisation of the rotor, and
- a tilt instant of a course of magnetic polarisation from the rotor to another during the rotation of the rotor (5),
said method comprising a step of aligning the direction and the course of the magnetic polarisation of the rotor (5) with an alignment position (PA) defined by the direction and the course of the polarisation of the stator (2) determined according to the information read from the position sensor relating to the course of the magnetic polarisation of the rotor,
said method being **characterised in that** the alignment step has:
- a duration (TA) at the end of which from any starting position (P0) of the rotor (5), the rotor (5) is theoretically aligned for the first time with the alignment position (PA), or
- a duration at the end of which from any starting position of the rotor (5), the amplitude of the oscillations of the rotor (5) around the alignment position (PA) is theoretically less than a predetermined threshold, or
- a duration at the end of which the amplitude of the oscillations of the rotor (5) for a theoretical starting position most distant from the alignment position (PA) is theoretically in a predetermined interval, or
- a duration at the end of which from any starting position of the rotor (5), the speed of the rotor (5) around the alignment position (PA) is theoretically less than a predetermined threshold,
at least one of these theoretical durations being informed in a memory connected to the controller, these theoretical durations being deducted from a theoretical model of the oscillatory behaviour of the rotor (5) around the alignment position (PA) of the rotor (5) for different starting positions (P0) of the rotor (5).

2. Method for monitoring the starting of a three-phase synchronous motor (1) with no commutator, said motor (1) comprising:
- a stator (2) comprising teeth (3) around which coils (4) are wound, defining three electric phases (U, V, W), the supply of which defines a direction and a course of the polarisation of the stator (2),
- a rotor (5) disposed concentrically and facing the stator (2), said rotor (5) comprising at least one pair of magnetic poles defining a magnetic polarisation of the rotor (5), and
- an electronic board comprising a controller arranged to adjust the switching of the current in the different phases of the stator (2) so as to define a variable direction of magnetic polarisation of the stator (2) adapted to rotate the rotor (5),
- one single position sensor (6) of the logical type disposed on the bisector between two teeth of the stator and intended to deliver a signal to the controller, said signal comprising information on:
- a course of magnetic polarisation of the rotor, and
- a tilt instant of a course of magnetic polarisation from the rotor to another during the rotation of the rotor (5),
said method comprising a step of aligning the direction and the course of the magnetic polarisation of the rotor (5) with an alignment position (PA) defined by the direction and the course of the polarisation of the stator (2) determined according to the information read from the position sensor relating to the course of the magnetic polarisation of the rotor,
said method being **characterised in that** the alignment step has a predetermined duration at the end of which from any starting position (P0) of the rotor (5), the amplitude of the oscillations of the rotor around the alignment position is necessarily less than a predetermined threshold, this duration being determined experimentally and informed in a memory connected to the controller.

3. Monitoring method according to one of claims 1 or 2, wherein the single position sensor (6) of the logical type is disposed between a first phase and a second phase of the stator, and the direction and the course of magnetic polarisation of the stator are determined such that if the position sensor has a first value, then the third phase of the stator is supplied according to a first polarity, and if the position sensor has a second value, then the third phase of the stator is supplied according to a second polarity.

4. Monitoring method according to claim 3, wherein the direction and the course of magnetic polarisation of the stator are achieved from the supply of the three phases, the first and the second phase having an opposite polarisation with respect to the polarisation of the third phase.

5. Monitoring method according to one of claims 1 or 3 to 4, wherein the predetermined threshold is equal to π/6 rad and the determined interval is comprised from - π/6 rad to π/6 rad around the alignment position (PA).

6. Monitoring method according to one of claims 1 or 3 to 5, wherein the predetermined duration of the alignment step is comprised from 10 microseconds to 1.50 seconds.

7. Monitoring method according to one of claims 1 to 6 comprising a second step of starting the rotor (5) done consecutively to the first alignment step, and wherein the controller is not based on the alignment position (PA) to define an initial position (PI) of the rotor (5) to a close determined error, achieves successive switchings to ensure the torque necessary for the progressive increase of the speed of the rotor (5), the switching instants being readjusted after each switching to minimise a time difference (Δt) with theoretical switching instants, the theoretical switching instants being determined:
- at each half-turn of the rotor (5) according to the information delivered by the position sensor (6) of the logical type, or
- from a theoretical speed value of the rotor (5) estimated from an estimation method considering the theoretical parameters of the motor (1) and its charge and the measurements of voltage and current consumed by the motor,
said second starting step being carried out until the motor can operate on permanent speed using the information provided by its single sensor.

8. Monitoring method according to claim 7, wherein at least the first switching is done at a maximum torque of the rotor.

9. Monitoring method according to one of the preceding claims, wherein the total duration(s) of the first step, if necessary of the second step, is/are measured and compared to a tabulated value or, if necessary, to tabulated values to detect an abnormal operating condition.

10. Motor (1) comprising:
- a stator (2) comprising teeth (3) around which coils (4) are wound, defining three electric phases (U, V, W), the supply of which defines a direction and a course of the polarisation of the stator (2),
- a rotor (5) disposed concentrically and facing the stator (2), said rotor (5) comprising at least one pair of magnetic poles defining a magnetic polarisation of the rotor (5), and
- an electronic board comprising a controller arranged to adjust the switching of the current in the different phases of the stator (2) so as to define a variable direction of magnetic polarisation of the stator (2) adapted to rotate the rotor (5),
- one single position sensor (6) of the logical type disposed on the bisector between two teeth of the stator and intended to deliver a signal to the controller, said signal comprising information on:
- a course of magnetic polarisation of the rotor, and
- a tilt instant of a course of magnetic polarisation from the rotor to another during the rotation of the rotor (5),
and a memory connected to the controller wherein a tabulated duration of the alignment step is recorded, if necessary a tabulated duration of the second step of starting the rotor,
the electronic board being arranged to align the direction and the course of the magnetic polarisation of the rotor (5) with an alignment position (PA) defined by the direction and the course of the polarisation of the stator (2) determined according to the information read from the position sensor relating to the course of the magnetic polarisation of the rotor, said motor being **characterised in that** said alignment being achieved during:
- a duration (TA) at the end of which from any starting position (P0) of the rotor (5), the rotor (5) is theoretically aligned for the first time with the alignment position (PA), or
- a duration at the end of which from any starting position of the rotor (5), the amplitude of the oscillations of the rotor (5) around the alignment position (PA) is theoretically less than a predetermined threshold, or
- a duration at the end of which the amplitude of the oscillations of the rotor (5) for a theoretical starting position most distant from the alignment position (PA) is theoretically in a predetermined interval, or
- a duration at the end of which from any starting position of the rotor (5), the speed of the rotor (5) around the alignment position (PA) is theoretically less than a predetermined threshold,
at least one of these theoretical durations being informed in a memory connected to the controller, these theoretical durations being deducted from a theoretical model of the oscillatory behaviour of the rotor (5) around the alignment position (PA) of the rotor (5) for different starting positions (P0) of the rotor (5).

11. Motor (1) comprising:
- a stator (2) comprising teeth (3) around which coils (4) are wound, defining three electric phases (U, V, W), the supply of which defines a direction and a course of the polarisation of the stator (2),
- a rotor (5) disposed concentrically and facing the stator (2), said rotor (5) comprising at least one pair of magnetic poles defining a magnetic polarisation of the rotor (5), and
- an electronic board comprising a controller arranged to adjust the switching of the current in the different phases of the stator (2) so as to define a variable direction of magnetic polarisation of the stator (2) adapted to rotate the rotor (5),
- one single position sensor (6) of the logical type disposed on the bisector between two teeth of the stator and intended to deliver a signal to the controller, said signal comprising information on:
- a course of magnetic polarisation of the rotor, and
- a tilt instant of a course of magnetic polarisation from the rotor to another during the rotation of the rotor (5),
and a memory connected to the controller wherein a tabulated duration of the alignment step is recorded, if necessary a tabulated duration of the second step of starting the rotor, the electronic board being arranged to align the direction and the course of the magnetic polarisation of the rotor (5) with an alignment position (PA) defined by the direction and the course of the polarisation of the stator (2) determined according to the information read from the position sensor relating to the course of the magnetic polarisation of the rotor, said motor being **characterised in that** said alignment being achieved during a predetermined duration at the end of which from any starting position (P0) of the rotor (5), the amplitude of the oscillations of the rotor around the alignment position is necessarily less than a predetermined threshold, this duration being determined experimentally and informed in the memory.
